# EUROPEAN PATENT APPLICATION

(11) **EP 4 848 412 A1**
(43) Date of publication of application: **02.12.2026**
(21) Application number: 25816181.9
(22) Date of filing: 24.04.2025
(51) Int. Cl.: H01M 10/658, H01M 50/244, H01M 50/289, H01M 50/204, H01M 50/249

(54) **BATTERY PACK AND VEHICLE INCLUDING SAME**

(30) Priority: 30.05.2024 KR 20240070933
(71) Applicant: LG Energy Solution, Ltd., Seoul 07335 (KR)
(72) Inventor: YUN, Hyun-Seop, Daejeon 34122 (KR); CHOI, Jung-Woo, Daejeon 34122 (KR)
(74) Representative: Plasseraud IP
(86) International application number: PCT/KR2025/005554
(87) International publication number: WO 2025/249767

(57) **Abstract**

Disclosed is a battery pack which includes a plurality of battery modules; a pack case having an inner space configured to accommodate the plurality of battery modules and a wall portion configured to surround the battery modules; and at least one fire-resistance barrier disposed between the battery modules to partition the inner space and detachably assembled to the wall portion, wherein the fire-resistance barrier includes an air layer therein.

## Description

### TECHNICAL FIELD

The present disclosure relates to a battery pack, and more specifically, to a battery pack capable of suppressing or delaying a thermal runaway phenomenon between battery modules when a fire occurs in the battery pack.

The present application claims priority to Korean Patent Application No. 10-2024-0070933 filed on May 30, 2024 in the Republic of Korea, the disclosures of which are incorporated herein by reference.

### BACKGROUND ART

Secondary batteries, which have high applicability according to product groups and electrical characteristics such as high energy density, are widely used not only in portable devices but also in electric vehicles (EVs) or hybrid electric vehicles (HEVs) driven by electric power sources. The secondary batteries are attracting attention as a new energy source for environmental friendliness and energy efficiency enhancement, not only because they may drastically reduce the use of fossil fuels, but also because they do not generate any byproducts from energy use.

Types of secondary batteries widely used at present include lithium ion batteries, lithium polymer batteries, nickel cadmium batteries, nickel hydrogen batteries, and nickel zinc batteries. When a high output voltage is required, a plurality of battery cells are connected in series to form a battery module or a battery pack. In addition, a plurality of battery cells are connected in parallel to form a battery module or a battery pack in order to increase the charge/discharge capacity. Therefore, the number of battery cells included in the battery module or the battery pack may be set variously depending on the required output voltage or charge/discharge capacity.

In general, the operating voltage of a secondary battery is approximately 2.5 V to 4.5 V. Therefore, for example, in an electric vehicle, a battery module is configured by connecting a plurality of secondary batteries in series and/or in parallel, and a battery pack is configured by connecting a plurality of battery modules in series and/or in parallel, and the battery pack is used as an energy source.

Meanwhile, recently, a battery pack has very low energy density because a large number of battery modules are tightly packed in the inner space of a limited pack case. The battery pack is criticized for its low fire safety because if a fire occurs in one of the battery modules, the heat may propagate and rapidly cause a chain ignition to other adjacent battery modules.

Accordingly, in the art, it is emerging as an important task to provide a method to delay or suppress the propagation of thermal energy between battery modules within a battery pack in preparation for the issue of battery module ignition when designing a battery pack.

### DISCLOSURE

### Technical Problem

The present disclosure is designed to solve the problems of the related art, and therefore the present disclosure is directed to providing a battery pack capable of suppressing or delaying the propagation of heat energy to adjacent battery modules when a fire occurs in a battery module.

In addition, the present disclosure aims is directed to applying a fire-resistance barrier, which may be assembled and disassembled, inside the pack case so that the battery modules and the fire-resistance barriers may be variably arranged as needed, thereby enabling more efficient use of the inner space of the battery pack.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack comprising: a plurality of battery modules; a pack case having an inner space configured to accommodate the plurality of battery modules and a wall portion configured to surround the battery modules; and at least one fire-resistance barrier disposed between the battery modules to partition the inner space and detachably assembled to the wall portion, wherein the fire-resistance barrier includes an air layer.

The fire-resistance barrier may include a rigid frame made of a rigid material and provided in a rectangular ring shape; and fire-resistance sheets coupled to both surfaces of the rigid frame.

The rigid frame may be made of a rigid material including at least one of steel, reinforced ceramic, and titanium.

The fire-resistance sheet may be made of fire-resistant material containing at least one of polyvinyl chloride, silicone, mica, and aerogel.

The wall portion may include a barrier assembly configured to allow the fire-resistance barrier to be slidably coupled along an upper and lower direction.

The barrier assembly may include a pair of guide blocks configured to protrude from a side surface of the wall portion, extend in the upper and lower direction, and be spaced apart from each other by a gap corresponding to a thickness of the fire-resistance barrier.

The pair of guide blocks may have at least one bolt fastening hole, and the fire-resistance barrier may have a through hole that coincides with the bolt fastening hole when inserted between the pair of guide blocks.

The barrier assembly may include an insert guide groove concavely formed in a side surface of the wall portion to a predetermined depth and extending in the upper and lower direction, and the fire-resistance barrier may include an insert protrusion provided at least at one end and configured to fit into the insert guide groove along the upper and lower direction.

The pack case may include a pack tray having an open top and a bottom plate on which the plurality of battery modules and the wall portion are mounted; and a pack cover configured to cover the open top of the pack tray.

The wall portion may include an outer wall disposed along an outer edge of the bottom plate; and a first cross beam configured to extend across the bottom plate and connected to the outer wall.

The fire-resistance barrier may have one end coupled to the first cross beam and the other end coupled to the outer wall.

The pack case may further include a second cross beam configured to separate the battery modules laterally adjacent to each other, and the fire-resistance barrier may be disposed between the battery module and the second cross beam.

The battery pack may further comprise a module top cover barrier detachably assembled to the wall portion to cover a top end of at least one of the battery modules.

The wall portion may have a barrier mounting groove recessively formed in a top end surface, and the module top cover barrier may have a mounting protrusion provided at an edge thereof to be shape-fitted with the barrier mounting groove.

In another aspect of the present disclosure, there is provided a vehicle including the battery pack described above.

### Advantageous Effects

According to the present disclosure, it is possible to provide a battery pack capable of suppressing or delaying the propagation of heat energy to adjacent battery modules when a fire occurs in a battery module.

In addition, according to the present disclosure, since a fire-resistance barrier that may be assembled and disassembled is applied inside the pack case, the battery modules and the fire-resistance barriers may be variably arranged as needed, thereby enabling more efficient use of the inner space of the battery pack.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a perspective view schematically showing a battery pack according to an embodiment of the present disclosure.
FIG. 2 is a partially exploded perspective view showing the battery pack of FIG. 1.
FIG. 3 is a perspective view showing a pack tray of FIG. 1.
FIG. 4 is a perspective view showing a fire-resistance barrier according to an embodiment of the present disclosure.
FIG. 5 is an exploded perspective view showing the fire-resistance barrier of FIG. 4.
FIG. 6 is a cross-sectional view showing the fire-resistance barrier of FIG. 4.
FIGS. 7 and 8 are assembly process diagrams showing the fire-resistance barrier for the pack case according to an embodiment of the present disclosure.
FIG. 9 is a drawing showing a battery pack having a different arrangement of the fire-resistance barriers according to the change in size of battery modules, compared to the embodiment of FIG. 2.
FIG. 10 is a drawing showing a barrier assembly of the fire-resistance barrier and the pack case according to another embodiment of the present disclosure.
FIG. 11 is a drawing showing an example of the fire-resistance barrier of FIG. 10 assembled to the pack case.
FIG. 12 is a drawing showing the fire-resistance barrier and a barrier assembly of the pack case according to still another embodiment of the present disclosure.
FIG. 13 is a drawing showing a part of a battery pack including a module top cover barrier according to still another embodiment of the present disclosure.
FIG. 14 is a plan view showing a part of a pack tray on which the module top cover barrier of FIG. 13 is assembled.
FIG. 15 is a partial plan view showing a pack tray to which a module top cover barrier is assembled according to still another embodiment of the present disclosure.
FIG. 16 is a drawing showing major parts of a battery pack including a second cross beam and a fire-resistance barrier according to still another embodiment of the present disclosure.
FIG. 17 is a schematic view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, when explaining the present disclosure, if it is judged that a detailed description of the relevant notice structure or function may obscure the main point of the present disclosure, such detailed description will be omitted.

Since the embodiments of the present disclosure are provided to more completely explain the present disclosure to those skilled in the art, the shapes and sizes of components in the drawings may be exaggerated, omitted, or schematically illustrated for clearer explanation. Accordingly, the size or ratio of each component does not entirely reflect the actual size or ratio.

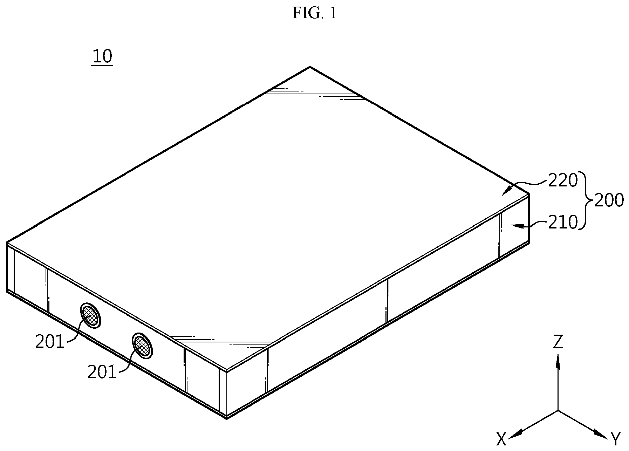

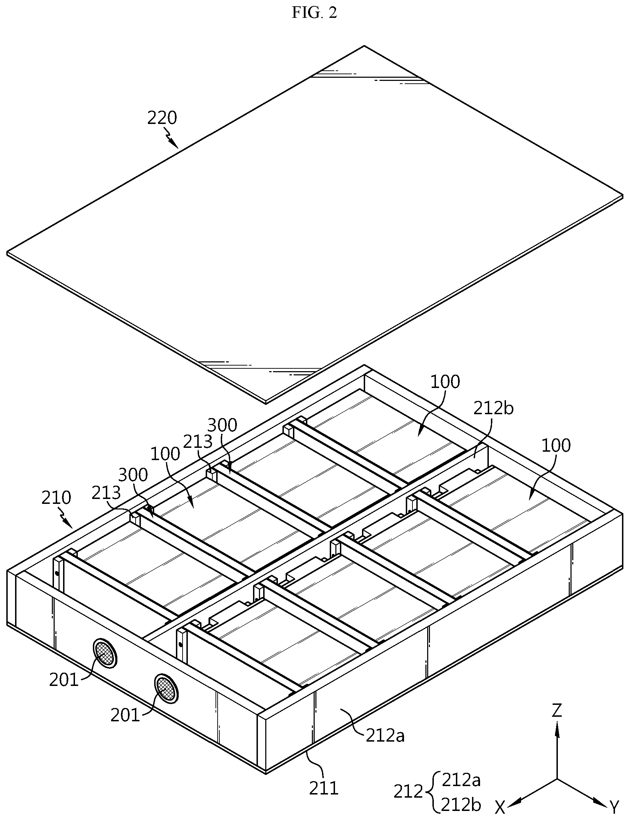

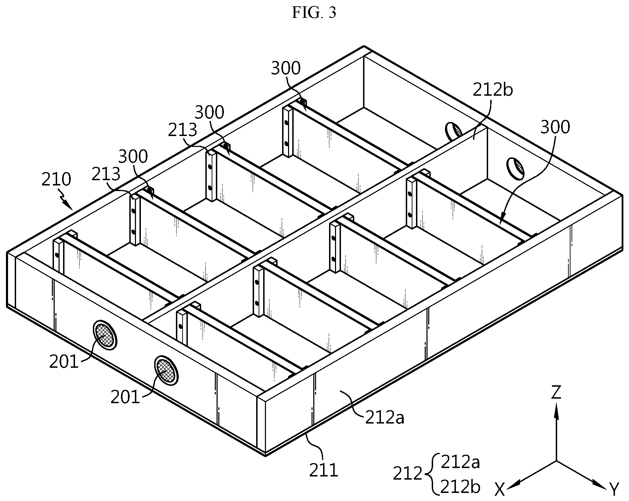

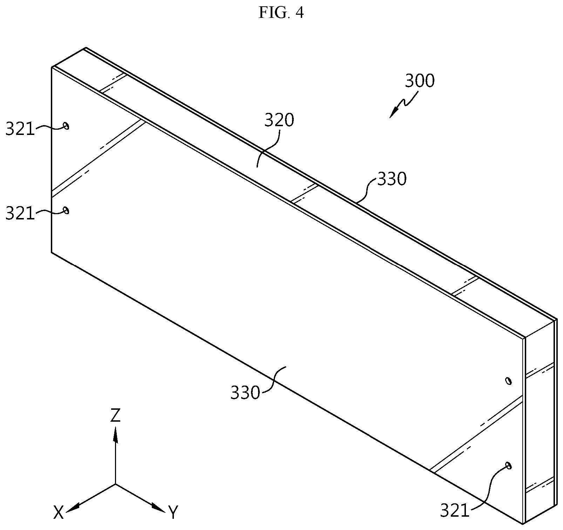

FIG. 1 is a perspective view schematically showing a battery pack according to an embodiment of the present disclosure, FIG. 2 is a partially exploded perspective view showing the battery pack of FIG. 1, FIG. 3 is a perspective view showing a pack tray of FIG. 1, and FIG. 4 is a perspective view showing a fire-resistance barrier according to an embodiment of the present disclosure.

Referring to these drawings, the battery pack 10 according to an embodiment of the present disclosure includes a plurality of battery modules 100, a pack case 200 for accommodating the plurality of battery modules 100, and a fire-resistance barrier 300 that partitions an inner space of the pack case 200 and is disposed between the battery modules 100.

The battery module 100 may include a plurality of battery cells and a module case that accommodates the battery cells. Here, the battery cell refers to a secondary battery including an electrode assembly, an electrolyte, and a battery case, and may be a secondary battery of any shape, such as a pouch shape, a cylindrical shape, or a rectangular shape, without limitation. The module case has an inner space capable of accommodating the battery cells, and may be made of a metal material, such as steel, or a non-metallic material with high rigidity, so as to protect the battery cells from external impact.

The battery module 100 may include a plurality of battery cells and a module case that accommodates the battery cells. Here, the battery cell refers to a secondary battery including an electrode assembly, an electrolyte, and a battery case, and may be a secondary battery of any shape, such as a pouch shape, a cylindrical shape, or a rectangular shape, without limitation. The module case has an inner space capable of accommodating the battery cells, and may be made of a metal material, such as steel, or a non-metallic material with high rigidity, so as to protect the battery cells from external impact.

The battery module 100 has at least one venting hole (not shown) on at least one side of the module case, and may be configured so that when the battery cells are ignited, gas, etc. is discharged to the outside of the module case through the venting hole so that the internal pressure does not rapidly increase.

The pack case 200 may be configured to include a wall portion 212 forming an inner space that surrounds the battery modules 100, and to accommodate the plurality of battery modules 100 in the inner space. For example, the pack case 200 may be configured to include a pack tray 210 and a pack cover 220, as shown in FIGS. 1 and 2.

The pack tray 210 may be provided in a box shape that has partitioned spaces therein and an open top. The battery modules 100 may be disposed one by one in each of the partitioned spaces. The pack cover 220 may cover the open top of the pack tray 210 and may be provided to be mutually coupled with the pack tray 210.

Specifically, referring to FIG. 3, the pack tray 210 may include a bottom plate 211 on which the plurality of battery modules 100 are mounted, and a wall portion 212 fixedly coupled to the bottom plate 211 to form an inner space in the pack tray 210.

The wall portion 212 may include an outer wall 212a arranged along an outer edge of the bottom plate 211. In addition, the wall portion 212 may include a first cross beam 212b extending across the bottom plate 211 and connected to the outer wall 212a. For example, the first cross beam 212b may be configured to pass through the center of the bottom plate and extend in a horizontal direction (X direction) and have both ends connected to the outer wall 212a to divide the inner space of the pack tray 210 into two parts. The pack tray 210 has an inner space surrounded by the bottom plate 211, the outer wall 212a, and the first cross beam 212b.

The battery modules 100 may be divided into two groups and arranged on the left side (-Y direction) and right side (+Y direction) of the first cross beam 212b. For convenience of explanation, the battery modules 100 arranged on the left side of the first cross beam 212b will be referred to as first group battery modules 100, and the battery modules 100 arranged on the right side of the first cross beam 212b will be referred to as second group battery modules 100.

The first cross beam 212b may serve to increase the structural rigidity of the pack tray 210 by supporting the outer wall 212a. Accordingly, deformation such as warping of the pack tray 210 may be suppressed even though external impact is applied. In addition, by separating the first group battery modules 100 and the second group battery modules 100, the first cross beam 212b may serve to block or delay the propagation of heat to the battery modules 100 of the other group when a fire occurs in the battery modules 100 of one group.

The pack tray 210 may further include a gas discharge hole 201. At least one gas discharge hole 201 may be provided on at least one side of the outer wall 212a.

A metal mesh net may be coupled to the gas discharge hole 201. Gas generated when the battery module 100 ignites may pass through the metal mesh net and be discharged to the outside of the pack case 200, but flames or sparks may be prevented from leaking to the outside by the metal mesh net. Although not shown, a valve unit that opens and closes according to the pressure difference between the inside and outside of the pack case 200 may be mounted in the gas discharge hole 201.

For example, two gas discharge holes 201 may be provided at the front side (+X direction) and the rear side (-X direction) of the outer wall 212a, respectively. One of the two gas discharge holes provided at the front side of the outer wall 212a may be provided at the left side (-Y direction) of the first cross beam 212b, and the other may be provided at the right side (+Y direction) of the first cross beam 212b. The two gas discharge holes 201 provided at the rear side of the outer wall 212a may also be provided at the left side and the right side of the first cross beam 212b one by one. The gas discharge holes located on the left side of the first cross beam 212b may be used to discharge gas generated when the first group battery module 100 ignites to the outside of the pack case 200, and the gas discharge holes 201 located on the right side of the first cross beam 212b may be used to discharge gas generated when the second group battery module 100 ignites to the outside of the pack case 200.

The pack cover 220 may be provided in the form of a plate or cover that is bolt-fastened to, for example, the top end of the outer wall 212a of the pack tray 210 and may cover the open top of the pack tray 210. Although not shown, a sealing gasket may be arranged at the top end of the outer wall 212a, and the edge of the pack cover 220 may be placed on the sealing gasket to increase the airtightness of the pack case 200.

Meanwhile, the battery pack 10 according to an embodiment of the present disclosure includes a fire-resistance barrier 300 that is detachably assembled to the wall portion 212 of the pack tray 210. The fire-resistance barrier 300 may be arranged between the battery modules 100 to partition the battery modules 100.

The fire-resistance barrier 300 is made of fire-resistance material and plays a role in blocking or delaying the propagation of heat energy between adjacent battery modules 100 when a fire occurs in the battery pack 10.

The fire-resistance barrier 300 according to an embodiment of the present disclosure may include an air layer 301 therein.

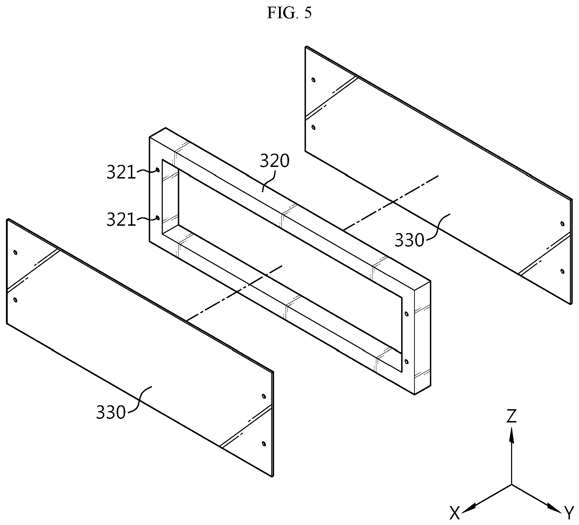

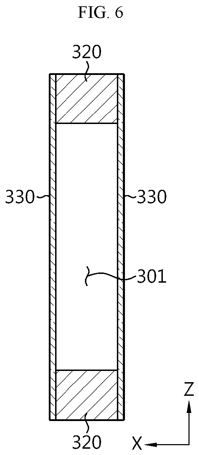

More specifically, as shown in FIGS. 4 and 5, the fire-resistance barrier 300 may include a rigid frame 320 made of a rigid material and provided in a rectangular ring shape, and fire-resistance sheets 330 coupled to both surfaces of the rigid frame 320. The fire-resistance barrier 300 has an air layer 301 therein, as shown in FIG. 6.

The rigid frame 320 may include, for example, at least one of steel, reinforced ceramic, and titanium as a rigid material. Also, the fire-resistance sheet 330 may be made of, for example, polyvinyl chloride (PVC) with an additional fire retardant added thereto or a material having excellent fire retardant performance, such as silicone-coated siltex. As another example, the fire-resistance sheet 330 may be made of, for example, at least one of aerogel, mica, and silicon.

The fire-resistance sheet 330 has an area that may integrally cover the rigid frame 320, and may be coupled to the rigid frame 320 by means of adhesion, bolting, riveting, etc.

Since the fire-resistance barrier 300 is made of a composite insulation structure including the fire-resistance sheet 330 and the air layer 301, as shown in FIG. 6, the insulation performance and the fire resistance performance may be further enhanced. In addition, the shape of the fire-resistance barrier 300 may be maintained constant without being deformed by the rigid frame 320 made of a rigid material.

The fire-resistance barrier 300 may be provided to have a length corresponding to the distance between the first cross beam 212b and the outer wall 212a and a height equal to or less than the outer wall 212a. Here, the outer wall 212a means an outer wall 212a arranged parallel to the first cross beam 212b.

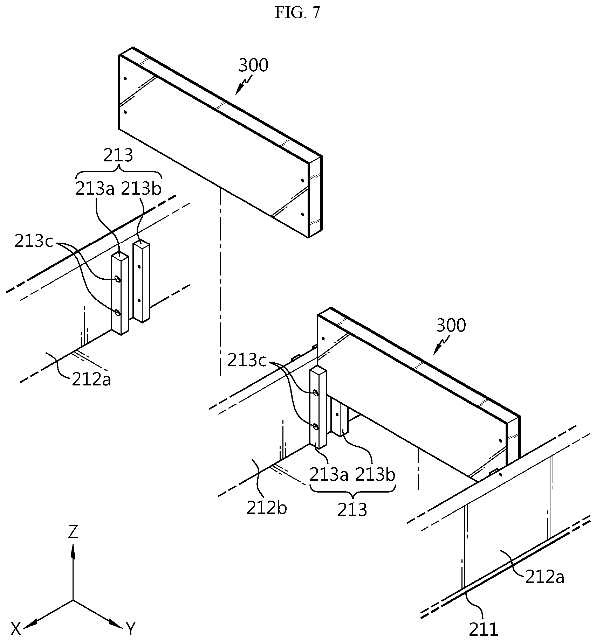

The fire-resistance barrier 300 may be slidably coupled to the pack tray 210 along the upper and lower direction, as shown in FIG. 7. In particular, the wall portion 212 provided in the pack case 200 according to the present disclosure may include a barrier assembly 213 as a means for accurately and easily installing the fire-resistance barrier 300 at a designated position and providing structural stability.

The barrier assembly 213 according to this embodiment may include a pair of guide blocks 213a, 213b that protrude from a side surface of the wall portion 212, extend in the upper and lower direction, and are spaced apart from each other by a gap corresponding to the thickness of the fire-resistance barrier 300. The pair of guide blocks 213a, 213b may be configured to be detachably attached to the wall portion 212. For example, the pair of guide blocks 213a, 213b may be configured to be coupled to and released from the wall portion 212 by bolting or snap-fitting.

The pair of guide blocks 213a, 213b may be installed on one side of the first cross beam 212b and the outer wall 212a facing one side of the first cross beam 212b, and on the other side of the first cross beam 212b and the outer wall 212a facing the other side of the first cross beam 212b, respectively (see FIG. 3). In this embodiment, the pair of guide blocks 213a, 213b are installed at regular intervals, but may be configured differently from this embodiment. For example, the gap between the pair of guide blocks 213a, 213b may be determined according to the width of the battery module 100 to be stored in the pack tray 210. That is, the gap between the pair of guide blocks 213a, 213b may be provided to be narrower or wider than the gap shown in FIG. 3 (gap in the X direction).

Next, the process and structure for assembling the fire-resistance barrier 300 to the pack tray 210 are briefly described as follows.

The fire-resistance barrier 300 may be inserted between the pair of guide blocks 213a, 213b installed on the wall portion 212, as shown in FIG. 7. At this time, one end of the fire-resistance barrier 300 may be inserted between the pair of guide blocks 213a, 213b installed on the first cross beam 212b, and the other end of the fire-resistance barrier 300 may be inserted between the pair of guide blocks 213a, 213b installed on the outer wall 212a. Also, one end of the fire-resistance barrier 300 may be connected to the first cross beam 212b, and the other end may be connected to the outer wall 212a.

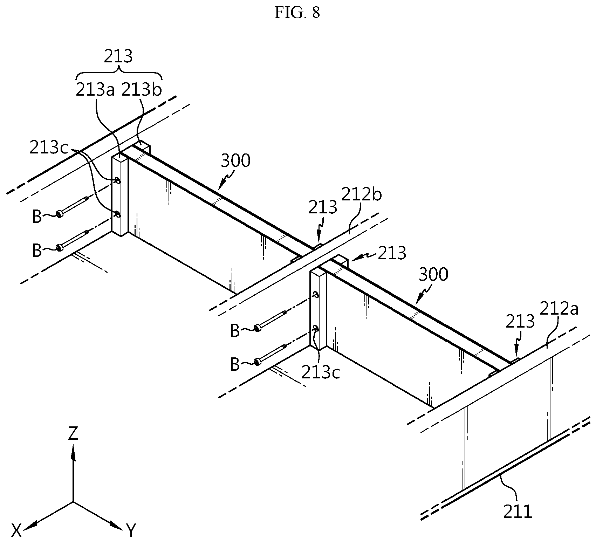

In addition, the pair of guide blocks 213a, 213b may have at least one bolt fastening hole 213c. For example, as shown in FIG. 8, the pair of guide blocks 213a, 213b may have a bolt fastening hole 213c that is provided at a predetermined height and is formed to penetrate in a direction intersecting the fire-resistance barrier 300. In addition, the fire-resistance barrier 300 may have a through hole 321 that coincides with the bolt fastening hole 213c when inserted between the pair of guide blocks 213a, 213b and seated on the bottom plate 211 of the pack tray 210. The bolt fastening hole 213c and the through hole 321 may be configured such that a fastening member B, such as a bolt or a rivet, is inserted and fastened therein.

According to this embodiment, the fire-resistance barrier 300 may be inserted between the pair of guide blocks 213a, 213b in the upper and lower direction and then fixed to the pack tray 210 by the fastening member B. Meanwhile, unlike this embodiment, the fastening member B may not be applied depending on the situation.

If the plurality of fire-resistance barriers 300 are coupled to the pack tray 210 in this manner, partitioned spaces capable of accommodating battery modules 100, respectively, may be provided inside the pack tray 210. The plurality of battery modules 100 may be arranged in each partitioned space one by one, and each battery module 100 may be configured such that its front, rear, left, and right sides are surrounded by the wall portion 212 and the fire-resistance barrier 300. Accordingly, when a certain battery module 100 among the battery modules 100 ignites, heat energy may be blocked or delayed by the wall portion 212 and the fire-resistance barrier 300.

In addition, the fire-resistance barrier 300 is configured to be assembled to and disassembled from the pack tray 210 as described above. Therefore, the fire-resistance barrier 300 may be added to or omitted from the pack tray 210 as needed.

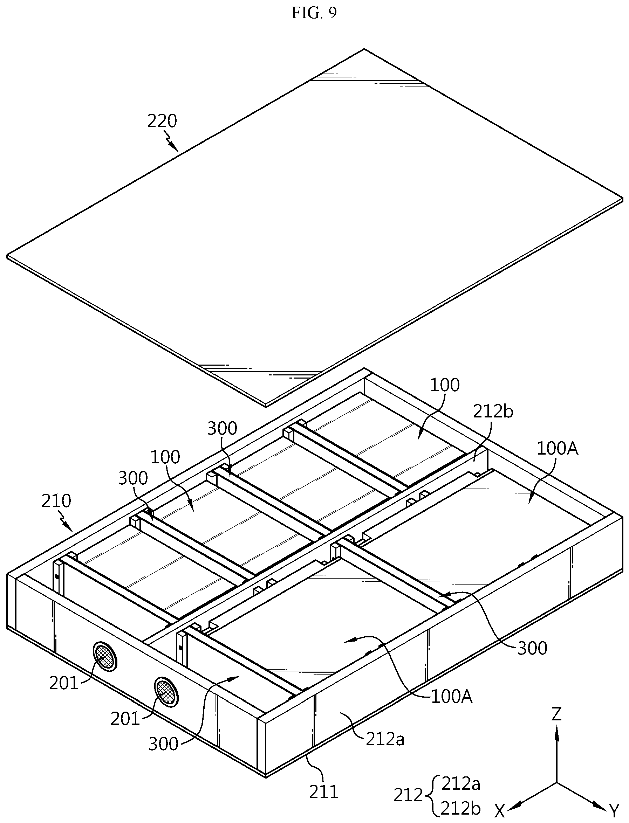

For example, not only battery modules 100 of the same size, but also battery modules 100 of different sizes may be accommodated in the partitioned spaces using the fire-resistance barrier 300. Specifically, as shown in FIG. 9, a part of the fire-resistance barriers 300 may be separated from the pack tray 210 to place a larger-sized battery module 100A on the right side of the first cross beam 212b. Although not shown, the gap between the barrier assemblies 213 may be narrowed and the number of gaps may be increased compared to this embodiment so that more fire-resistance barriers 300 may be assembled into the pack tray 210. In this case, battery modules 100 or electrical components of more diverse sizes may be accommodated in the partitioned spaces, respectively.

In addition, when the fire-resistance barrier 300 is damaged or has durability problems, the fire-resistance barrier 300 may be replaced or easily repaired.

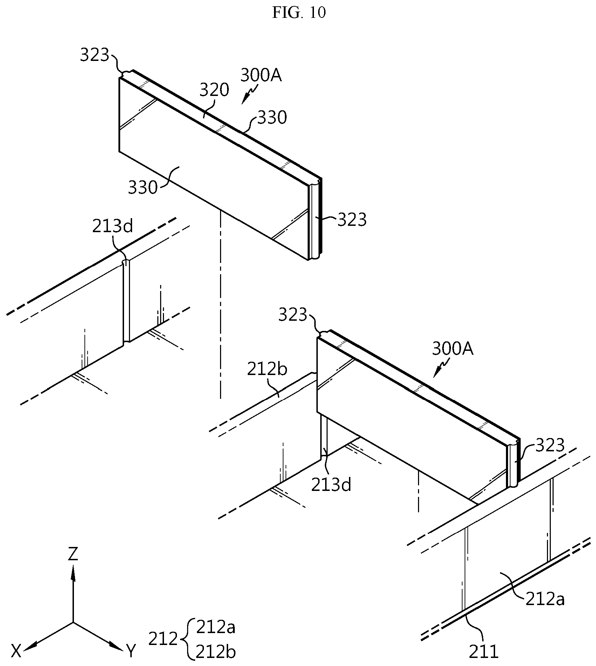

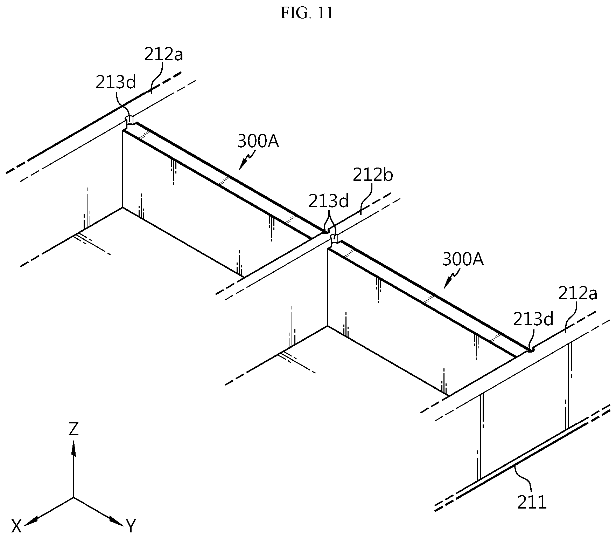

FIG. 10 is a drawing showing the fire-resistance barrier 300A and a barrier assembly 213 of the pack case 200 according to another embodiment of the present disclosure, and FIG. 11 is a drawing showing an example of the fire-resistance barrier 300A of FIG. 10 assembled to the pack case 200.

The same reference numerals as in the former drawings represent the same parts, and the corresponding parts will not be described in detail, and features different from the former embodiment will be mainly explained.

A barrier assembly 213 according to another embodiment of the present disclosure may include an insert guide groove 213d that is concavely formed to a predetermined depth in a side surface of the wall portion 212 and extends in the upper and lower direction, as shown in FIG. 10. A fire-resistance barrier 300 according to another embodiment of the present disclosure may include an insert protrusion 323 that is provided at least at one end and is arranged to be fitted into the insert guide groove 213d along the upper and lower direction.

According to the embodiment shown in FIGS. 10 and 11, the inner space freedom of the pack case 200 and the assembly convenience of the fire-resistance barrier 300A may be increased compared to the embodiment shown in FIGS. 7 and 8. For example, in the former embodiment, the pair of guide blocks 213a, 213b are provided in a protruding form from the side surface of the wall portion 212, so that when the battery module 100 is placed, the guide blocks 213a, 213b and the battery module 100 may interfere with each other. In addition, there is a disadvantage in that the fire-resistance barrier 300 and the guide blocks 213a, 213b must be processed for bolting, which increases the assembly work. However, according to another embodiment of the present disclosure, the assembly of the pack tray 210 and the fire-resistance barrier 300A may be completed by fitting the insert protrusion 323 of the fire-resistance barrier 300A into the insert guide groove 213d of the wall portion 212. Therefore, the fire-resistance barrier 300A is very easily assembled. In addition, since there is no part protruding from the wall portion 212, unlike the pair of guide blocks 213a, 213b of the former embodiment, it is easy to place the battery module 100 in close contact with the fire-resistance barrier 300A.

Although not shown, the wall portion 212 may have a plurality of insert guide grooves 213d, and the plurality of insert guide grooves 213d may be provided along the longitudinal direction (X direction) of the wall portion 212. Here, the gas between the insert guide grooves 213d may be configured in various ways. For example, the number of insert guide grooves 213d may be increased and the gap between the insert guide grooves 213d may be configured narrower than in this embodiment. The fire-resistance barrier 300A may be inserted at a required position among the plurality of insert guide grooves 213d. In this case, the assembly position of the fire-resistance barrier 300A may be variably operated depending on the size of the battery module 100 to be mounted on the pack tray 210.

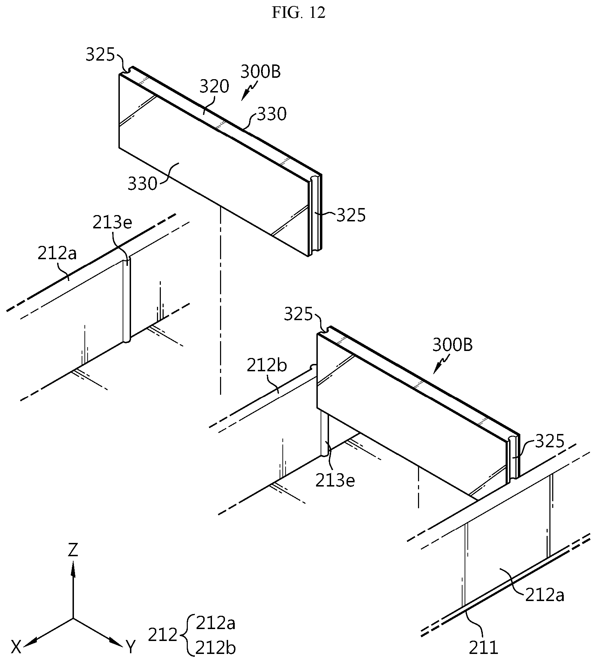

As a modified example of the embodiment of FIGS. 10 and 11, a barrier assembly 213 according to still another embodiment of the present disclosure may include an insert guide protrusion 213e that is formed to protrude from a side surface of the wall portion 212 and extend in the upper and lower direction, as shown in FIG. 12, and the fire-resistance barrier 300B may have an insert groove 325 that is provided at least at one end and is configured to be fitted into the insert guide protrusion 213e along the upper and lower direction.

The assembly of the pack tray 210 and the fire-resistance barrier 300B may be completed by fitting the insert groove 325 of the fire-resistance barrier 300B into the insert guide protrusion 213e of the wall portion 212. Therefore, as in the former embodiment, the fire-resistance barrier 300B is very easily assembled. Like the pair of guide blocks 213a, 213b of the former embodiment, since there is no part protruding from the wall portion 212, it is easy to place the battery module 100.

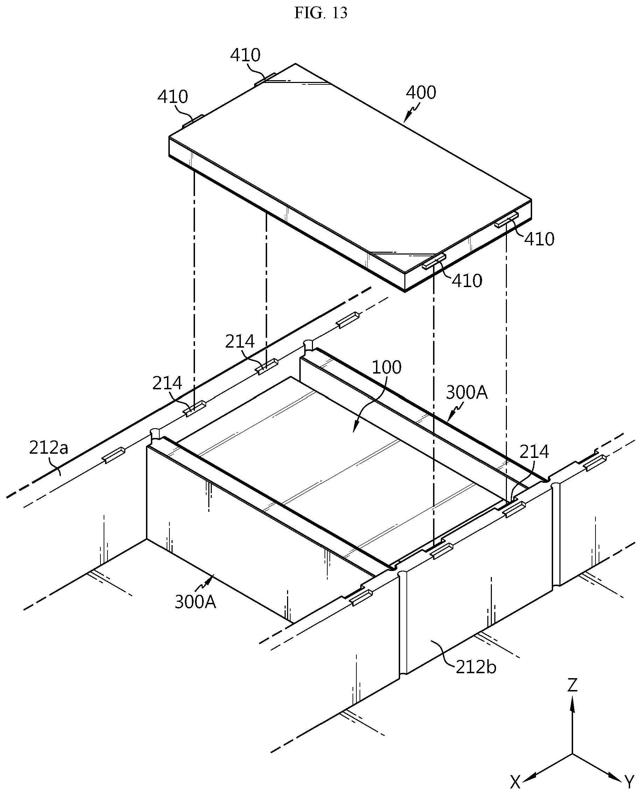

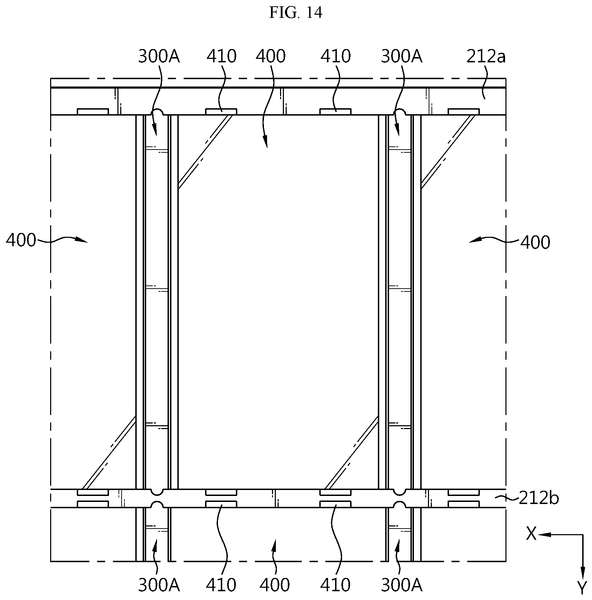

FIG. 13 is a drawing showing a part of a battery pack 10 including a module top cover barrier 400 according to still another embodiment of the present disclosure, and FIG. 14 is a plan view showing a part of a pack tray 210 on which the module top cover barrier 400 of FIG. 13 is assembled.

The same reference numerals as in the former drawings represent the same parts, and the corresponding parts will not be described in detail, and features different from the former embodiment will be mainly explained.

The battery pack 10 according to still another embodiment of the present disclosure may further include a module top cover barrier 400 that is detachably assembled to the wall portion 212 to cover the top end of at least one of the battery modules 100.

For example, the battery pack 10 according to still another embodiment of the present disclosure may be configured such that the front, back, left and right sides of the battery module 100 are covered by the wall portion 212 and the fire-resistance barrier 300A according to the former embodiment, and the upper part of the battery module 100 is covered by the module top cover barrier 400. Here, the module top cover barrier 400 may be provided to have, for example, substantially the same configuration as the fire-resistance barrier 300A.

Referring to FIG. 13, the wall portion 212 of the pack tray 210 according to still another embodiment of the present disclosure may have a barrier mounting groove 214 concavely formed in the top end surface, and the module top cover barrier 400 may have a mounting protrusion 410 provided at an edge to be shape-fitted with the barrier mounting groove 214.

According to this embodiment, as shown in FIG. 14, the module top cover barrier 400 is mounted at the top end of the wall portion 212 of the pack tray 210 and may cover the upper part of the battery module 100. In this case, since the top and front, back, left, and right sides of the battery module 100 may all be covered, when a fire occurs in the battery module 100, heat and flame may be more effectively prevented from being transferred to other adjacent battery modules 100.

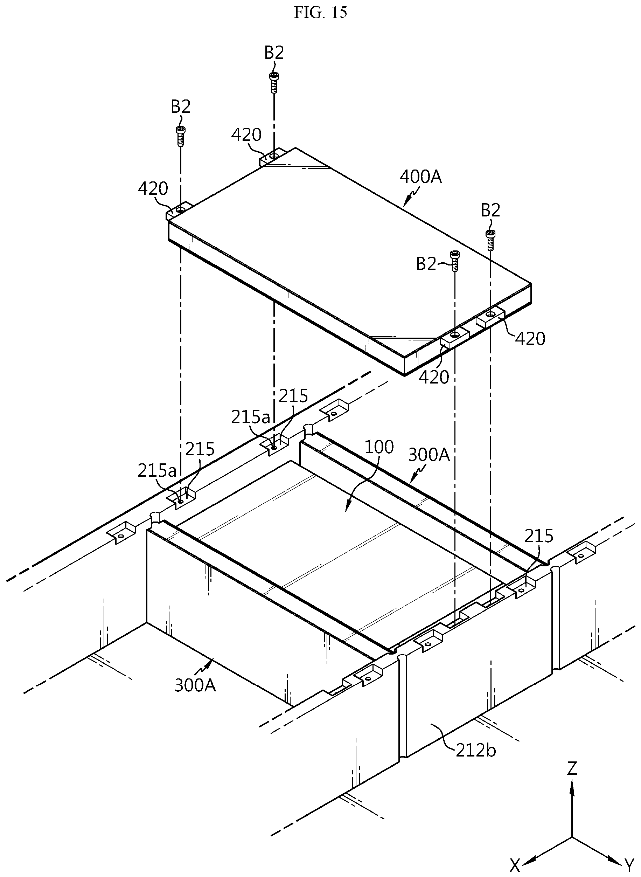

As another example of the embodiment of FIGS. 13 and 14, as shown in FIG. 15, the wall portion 212 according to still another embodiment of the present disclosure may include a bolt fastening portion 215 having a screw hole 215a at a top end. Also, the module top cover barrier 400A may include a protrusion 420 provided at an edge and coupled to the bolt fastening portion 215 by the bolt B2. For example, the bolt fastening portion 215 may be concavely formed into the top end surface of the wall portion 212, and the protrusion 420 of the module top cover barrier 400A may be provided to have a bolt insert hole that is shape-fitted with the bolt fastening portion 215 and vertically coincides with the screw hole 215a. According to this embodiment, the module top cover barrier 400A may be more stably fixed to the pack tray 210.

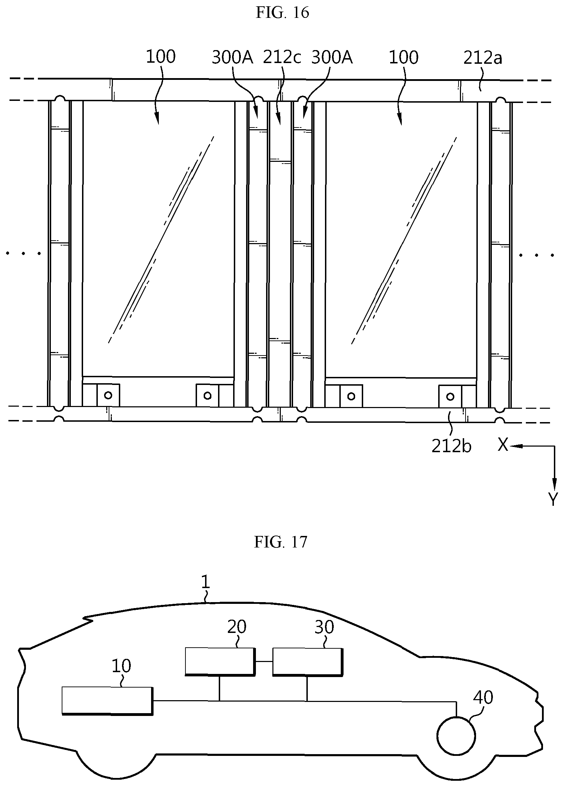

FIG. 16 is a drawing showing major parts of a battery pack 10 including a second cross beam 212c and a fire-resistance barrier 300 according to still another embodiment of the present disclosure.

The same reference numerals as in the former drawings represent the same parts, and the corresponding parts will not be described in detail, and features different from the former embodiment will be mainly explained.

The battery pack 10 according to another embodiment of the present disclosure may further include a second cross beam 212c, compared to the former embodiments. That is, the pack tray 210 according to still another embodiment of the present disclosure may include a bottom plate 211, an outer wall 212a, a first cross beam 212b, and a second cross beam 212c. Here, the second cross beam 212c is arranged in a direction intersecting the first cross beam 212b described above and is a portion of the pack tray 210 that partitions the battery modules 100 that are laterally adjacent.

Both ends of the second cross beam 212c may be fixedly coupled to the first cross beam 212b and the outer wall 212a. The second cross beam 212c, together with the first cross beam 212b, serves to support the outer wall 212a to increase the structural rigidity of the pack tray 210. In addition, the second cross beam 212c may play a role in blocking or delaying heat propagation between adjacent battery modules 100.

In still another embodiment of the present disclosure, the fire-resistance barrier 300 may be disposed between the battery module 100 and the second cross beam 212c, as shown in FIG. 16. In this case, the structural rigidity of the pack case 200 may be further strengthened, and heat propagation between the battery modules 100 may be more reliably blocked or delayed when a fire occurs.

Next, a vehicle according to the present disclosure is briefly described with reference to FIG. 17.

FIG. 17 is a schematic view showing a vehicle including the battery pack 10 according to an embodiment of the present disclosure.

The vehicle 1 according to the present disclosure may be configured to include the battery pack 10, an ECU (Electronic Control Unit) 20, an inverter 30, and a motor 40 according to an embodiment of the present disclosure. Preferably, the vehicle 1 may be an electric vehicle.

The battery pack 10 may be used as an electrical energy source to provide a driving force to the motor 40 to drive the vehicle 1. The battery pack 10 may be charged or discharged by the inverter 30 depending on the driving of the motor 40 and/or the internal combustion engine (not shown). The battery pack 10 may be charged by a regenerative charging device combined with a brake. The battery pack 10 may be electrically connected to the motor 40 of the vehicle 1 via the inverter 30.

The ECU 20 is an electronic control device that controls the state of the vehicle 1. For example, the ECU 20 determines torque information based on information such as an accelerator, brake, and speed, and controls the output of the motor 40 to match the torque information. In addition, the ECU 20 sends a control signal to the inverter 30 so that battery pack 10 may be charged or discharged based on the state information such as SOC and SOH of the battery pack 10 received by the BMS. The inverter 30 charges or discharges the battery pack 10 based on the control signal of the ECU 20. The motor 40 drives the vehicle 1 based on the control information (e.g., torque information) transmitted from the ECU 20 using the electric energy of the battery pack 10.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

In addition, terms indicating directions such as upward, downward, left, and right directions are used in this specification, but it is obvious to those skilled in the art that these terms are only for convenience of explanation and may vary depending on the location of the target object or the location of the observer.

## Claims

1. A battery pack comprising:
a plurality of battery modules;
a pack case having an inner space configured to accommodate the plurality of battery modules and a wall portion configured to surround the battery modules; and
at least one fire-resistance barrier disposed between the battery modules to partition the inner space and detachably assembled to the wall portion,
wherein the fire-resistance barrier includes an air layer therein.

2. The battery pack according to claim 1,
wherein the fire-resistance barrier includes a rigid frame made of a rigid material and provided in a rectangular ring shape; and fire-resistance sheets coupled to both surfaces of the rigid frame.

3. The battery pack according to claim 2,
wherein the rigid frame is made of a rigid material including at least one of steel, reinforced ceramic, and titanium.

4. The battery pack according to claim 2,
wherein the fire-resistance sheet is made of fire-resistant material containing at least one of polyvinyl chloride, silicone, mica, and aerogel.

5. The battery pack according to claim 1,
wherein the wall portion includes a barrier assembly configured to allow the fire-resistance barrier to be slidably coupled along an upper and lower direction.

6. The battery pack according to claim 5,
wherein the barrier assembly includes a pair of guide blocks configured to protrude from a side surface of the wall portion, extend in the upper and lower direction, and be spaced apart from each other by a gap corresponding to a thickness of the fire-resistance barrier.

7. The battery pack according to claim 6,
wherein the pair of guide blocks have at least one bolt fastening hole, and the fire-resistance barrier has a through hole that coincides with the bolt fastening hole when inserted between the pair of guide blocks.

8. The battery pack according to claim 5,
wherein the barrier assembly includes an insert guide groove concavely formed in a side surface of the wall portion to a predetermined depth and extending in the upper and lower direction, and
wherein the fire-resistance barrier includes an insert protrusion provided at least at one end and configured to fit into the insert guide groove along the upper and lower direction.

9. The battery pack according to claim 1,
wherein the pack case includes:
a pack tray having an open top and a bottom plate on which the plurality of battery modules and the wall portion are mounted; and
a pack cover configured to cover the open top of the pack tray.

10. The battery pack according to claim 9,
wherein the wall portion includes:
an outer wall disposed along an outer edge of the bottom plate; and
a first cross beam configured to extend across the bottom plate and connected to the outer wall.

11. The battery pack according to claim 10,
wherein the fire-resistance barrier has one end coupled to the first cross beam and the other end coupled to the outer wall.

12. The battery pack according to claim 1,
wherein the pack case further includes a second cross beam configured to separate the battery modules laterally adjacent to each other, and
wherein the fire-resistance barrier is disposed between the battery module and the second cross beam.

13. The battery pack according to claim 1, further comprising:
a module top cover barrier detachably assembled to the wall portion to cover a top end of at least one of the battery modules.

14. The battery pack according to claim 13,
wherein the wall portion has a barrier mounting groove recessively formed in a top end surface, and
wherein the module top cover barrier has a mounting protrusion provided at an edge thereof to be shape-fitted with the barrier mounting groove.

15. A vehicle comprising the battery pack according to any one of claims 1 to 14.
